# EUROPÄISCHE PATENTSCHRIFT

(11) **EP 1 318 070 B1**
(45) Veröffentlichungstag und Bekanntmachung des Hinweises auf die Patenterteilung: **07.09.2005**
(21) Anmeldenummer: 02024640.1
(22) Anmeldetag: 05.11.2002
(51) Int. Cl.: B62K 27/12, B62K 13/02

(54) **Kopplungsvorrichtung für Fahrräder**
Coupling device for bicycles
Dispositif de couplage pour bicyclettes

(30) Priorität: 05.12.2001 DE 10159547
(43) Veröffentlichungstag der Anmeldung: 11.06.2003
(73) Patentinhaber: Bauer, Anton, 63500 Seligenstadt (DE); Wissel, Peter, 63500 Seligenstadt (DE)
(72) Erfinder: Bauer, Anton, 63500 Seligenstadt (DE); Wissel, Peter, 63500 Seligenstadt (DE)
(74) Vertreter: Katscher, Helmut

(56) Entgegenhaltungen:
- DE-A- 19 634 225
- DE-U- 9 212 622
- DE-U- 9 405 806
- GB-A- 2 287 437

## Beschreibung

Die Erfindung betrifft eine Kopplungsvorrichtung für Fahrräder zum Verbinden eines schleppenden Fahrrads mit einem zu schleppenden Kinderfahrrad, wobei das Vorderrad des zu schleppenden Kinderfahrrads vom Boden abgehoben mit der Kopplungsvorrichtung fest verbindbar ist, wobei die Kopplungsvorrichtung an mindestens zwei Stellen am Rahmen des schleppenden Fahrrads fest anbringbar ist und eine Gabel mit Haltelementen zur Aufnahme der Vorderradachse des zu schleppenden Kinderfahrrads aufweist.

Sobald kleine Kinder selbstständig Fahrradfahren gelernt haben, wollen Sie bei gemeinsamen Fahrradausflügen mit Erwachsenen, üblicherweise eigenständig mit ihrem Kinderfahrrad mitradeln. Dabei kommt es nicht selten vor, dass aufgrund gefährlicher Verkehrssituationen oder einer von dem Kind als zu lange empfundenen Ausflugsdauer das Kind nicht mehr selbst auf dem Kinderfahrrad radeln darf oder möchte. In diesem Fall sehen sich die erwachsenen Begleitpersonen oftmals gezwungen, das Kind auf das eigene Fahrrad zu übernehmen und das nicht mehr benutzte Kinderfahrrad mitzuführen. Ohne weitere Hilfsmittel ist der Erwachsene dann dazu gezwungen, abzusteigen und sowohl das eigene Fahrrad als auch das Kinderfahrrad neben sich herzuschieben.

Gerade bei kleinen Kindern, die oftmals bereits nach kurzen Strecken nicht mehr selbstständig fahren wollen, können diese beispielsweise in einem Kindersitz ohne Schwierigkeiten von einem Erwachsenen auf dessen Fahrrad mitgenommen werden. Eine ungestörte Fortsetzung des begonnenen Ausflugs scheitert dennoch meistens daran, dass das nun nicht mehr benutzte Kinderfahrrad von einem Erwachsenen geschoben werden muss, wozu dieser jedoch meistens selbst absteigen und auch sein eigenes Fahrrad schieben muss.

Es sind verschiedene Kopplungsvorrichtungen bekannt, die eine sichere Befestigung und Mitführung eines Kinderrades an einem schleppenden Fahrrad ermöglichen. Einige Kopplungsvorrichtungen, beispielsweise beschrieben in DE 195 31 503 A1, G 94 19 256.1 oder G 93 19 700.4 sehen dazu eine starre Verbindung des schleppenden Fahrrads mit dem Lenker oder der Lenkstange des zu schleppenden Kinderfahrrads vor. Auch ohne dass das Kind auf dem zu schleppenden Kinderfahrrad sitzen bleibt, müssen derartige Kopplungsvorrichtungen unverhältnismäßig stabil ausgeführt werden, um ein Kippen des oftmals nur über einen langen Hebelarm verbundenen Kinderfahrrads zu verhindern und ein sicheres Mitführen des Kinderfahrrads zu gewährleisten. Die dadurch bedingte Größe und das Gewicht der am schleppenden Fahrrad befestigten Kopplungsvorrichtung führen zu einer dauerhaften Beeinträchtigung bei der Benutzung dieses Fahrrades, auch und gerade wenn kein Kinderfahrrad mitgeführt wird.

Es sind auch Kopplungsvorrichtungen (G 92 12 622.7) bekannt, bei denen das Vorderrad des zu schleppenden Kinderfahrrads von einer Gabel angehoben und seitlich am Hinterrad des schleppenden Fahrrads mitgeführt wird. Die in dieser Veröffentlichung beschriebene Kopplungsvorrichtung kann jedoch ein sicheres Mitführen des zu schleppenden Kinderfahrrads, insbesondere bei Kurvenfahrten oder in unebenem Gelände, nicht gewährleisten. Das Kind kann nicht auf dem zu schleppenden Kinderfahrrad sitzen bleiben, sondern muss absteigen und auf einem Erwachsenenfahrrad mitgenommen werden.

Eine Kopplungsvorrichtung der eingangs genannten Gattung, beschrieben in G 94 05 806.7, weist eine seitlich am schleppenden Fahrrad befestigte Kopplungsvorrichtung mit einer das Vorderrad des Kinderfahrrads aufnehmenden Gabel auf, wobei als Halteelemente eine Halteöse und eine Haltekralle zur Aufnahme der Vorderradachse des Kinderfahrrads vorgesehen sind. Um eine ausreichend sichere Befestigung des Kinderfahrrads an der Haltevorrichtung zu gewährleisten, muss die Vorderradgabel des Kinderfahrrads zumindest auf der Seite der Haltekralle fest mit dieser verschraubt werden. Diese starre Verbindung des Kinderfahrrads mit dem schleppenden Fahrrad hat zur Folge, dass bereits bei geringen Unebenheiten das Hinterrad des mitgeführten Kinderfahrrads vom Boden abhebt oder auf den Boden gedrückt wird und ein dadurch bedingtes hohes Drehmoment auf die starre Befestigung des Kinderfahrrads an der Haltevorrichtung bewirkt. Neben einer erheblichen Beeinträchtigung des Fahrverhaltens, auch des schleppenden Fahrrads, führt dies zu einer hohen Materialbelastung der Kopplungsvorrichtung und nicht selten zu einem vorzeitigen ungewünschten Lockern der starren Verbindung zwischen dem Kinderfahrrad und dem zu schleppenden Fahrrad.

Aus GB 22 87 437 A ist bekannt, Befestigungsmuttern an der Hinterachse eines schleppenden Fahrrads zylindrisch auszubilden, wodurch eine drehbewegliche Verbindung mit einem zweiten, zu schleppenden Fahrrad ermöglicht ist. Eine derartige Verbindung ist jedoch nur mit einem zu schleppenden Fahrrad möglich, dessen Vorderradgabel ausreichend groß ist, um ungestört mit der Hinterradachse des schleppenden Fahrrads verbunden zu werden.

Aufgabe der Erfindung ist es demzufolge, eine Kopplungsvorrichtung für Fahrräder zum Verbinden eines schleppenden Fahrrads mit einem zu schleppenden Kinderfahrrad so zu gestalten, dass ein sicheres Mitführen des zu schleppenden Kinderfahrrads mit nur geringer Beeinträchtigung der Fahreigenschaften des schleppenden Fahrrads möglich wird. Im unbenutzten Zustand soll die Kopplungsvorrichtung möglichst wenig Platz beanspruchen und nur ein geringes Gewicht aufweisen. Die Verbindung des zu schleppenden Kinderfahrrads mit der Kopplungsvorrichtung des schleppenden Fahrrads sollte schnell und möglichst ohne Werkzeug erfolgen können. Die Kopplung des zu schleppenden Kinderfahrrads mit dem schleppenden Fahrrad sollte ausreichend stabil und sicher sein, um dem Kind zu ermöglichen, weiterhin auf dem mitgeführten Kinderfahrrad sitzen bleiben zu können und nicht beispielsweise in einem Kindersitz oder auf dem Gepäckträger eines anderen Fahrrads die Fahrt fortsetzen zu müssen.

Diese Aufgabe wird erfindungsgemäß dadurch gelöst, dass auf beiden Seiten der Vorderradachse des zu schleppenden Kinderfahrrads zylindrische Befestigungsmuttern angebracht sind, deren Außendurchmesser an die Größe der Ausnehmungen der Halteelemente angepasst sind.

Die zu beiden Seiten der Vorderradachse des Kinderfahrrads hervorstehenden zylindrischen Befestigungsmuttern können schnell und zuverlässig in den Ausnehmungen der Halteelemente der Kopplungsvorrichtung aufgenommen werden und eine stabile und sichere Befestigung des zu schleppenden Kinderfahrrads mit der Kopplungsvorrichtung des schleppenden Fahrrads gewährleisten. Die zylindrischen Befestigungsmuttern sind dabei drehbeweglich in den Ausnehmungen der Halteelemente gelagert, wodurch eine Drehbewegung des mitgeführten Kinderrads um die relativ zur Kopplungsvorrichtung fixierte Vorderradachse des Kinderfahrrads ermöglicht wird. Auf diese Weise wird sichergestellt, dass auch in unebenem Gelände, beispielsweise während des Überfahrens eines Bordsteins, das zu schleppende Kinderfahrrad diese Unebenheiten ausgleichen kann und alle drei Räder des Gespanns in ständigem Bodenkontakt verbleiben. Die Drehmomentbelastung, senkrecht zur Vorderradachse des mitgeführten Kinderfahrrads, wird weitestgehend minimiert, so dass aufgrund der geringeren Beanspruchung die Betriebssicherheit der Kopplungsvorrichtung steigt und nur eine wesentlich geringere Beeinträchtigung der Fahreigenschaften für das schleppende Fahrrad erfolgt.

Die zylindrischen Befestigungsmuttern können die üblicherweise zur Befestigung der Vorderradachse an der Gabel des Kinderfahrrads verwendeten Muttern ersetzen und dauerhaft am Kinderfahrrad verbleiben. Für die sichere Verbindung des Kinderfahrrads mit der ebenfalls dauerhaft am schleppenden Fahrrad montierten Kopplungsvorrichtung müssen lediglich die zylindrischen Befestigungsmuttern drehbeweglich in den Ausnehmungen der Halteelemente befestigt werden. Dazu ist bei geeigneter Konstruktion der Halteelemente kein gesondertes Werkzeug notwendig. Da keine weiteren Umbaumaßnahmen erforderlich sind, kann die sichere Befestigung des mitzuführenden Kinderfahrrads am schleppenden Fahrrad innerhalb kürzester Zeit vorgenommen und die Fahrt fortgesetzt werden.

Aufgrund der drehbeweglichen Befestigung des Kinderfahrrads mit der Kopplungsvorrichtung können die auftretenden Belastungen auch dann zuverlässig von der Kopplungsvorrichtung aufgenommen werden, wenn das Kind auf dem Kinderfahrrad sitzen bleibt und zusammen mit dem Kinderfahrrad abgeschleppt wird. Ein Großteil des Gewichts des Kindes wird dabei auf das Hinterrad des Kinderfahrrads übertragen, welches ständig im Bodenkontakt bleibt und den Bewegungen des schleppenden Fahrrads folgt. Da das Vorderrad des Kinderfahrrads angehoben ist und die Vorderradachse in der Kopplungsvorrichtung fixiert gelagert ist, kann das Kind nicht durch Lenkbewegungen die Fahrtrichtung beeinflussen und dadurch kritische Situationen herbeiführen.

Einer Ausführung des Erfindungsgedankens zufolge ist vorgesehen, dass zwischen den zylindrischen Befestigungsmuttern und den Ausnehmungen der Halteelemente Lagerhülsen drehbeweglich angeordnet sind. Die Lagerhülsen erleichtern die Drehbewegung des Kinderfahrrads um die fest in der Kupplungsvorrichtung gelagerten Vorderradachse.

Gemäß einer vorteilhaften Ausgestaltung des Erfindungsgedankens ist vorgesehen, dass die zylindrischen Befestigungsmuttern als Gleitlager gestaltet und/oder mit geeignetem Lagermaterial beschichtet sind. Bei derart gestalteten zylindrischen Befestigungsmuttern kann auf gesonderte Lagerhülsen verzichtet werden, die beim Verbinden oder Abkoppeln des Kinderfahrrads herunter fallen und verloren gehen können.

Vorzugsweise ist vorgesehen, dass die Querschnittsfläche einer der beiden Ausnehmungen im Abstand von dem aufzunehmenden Kinderfahrrad im Wesentlichen vergrößert ist. Für eine sichere Befestigung des Kinderfahrrads an der Kopplungsvorrichtung müssen die Halteelemente ausreichend stabil ausgelegt sein und die in den Ausnehmungen gelagerten zylindrischen Befestigungsmuttern sicher aufnehmen. Zweckmäßigerweise sollte eine der beiden zylindrischen Befestigungsmuttern seitlich in die zugeordnete Ausnehmung eingeschoben werden können, so dass nur auf der gegenüberliegenden Seite ein Öffnen und nach Aufnahme der zweiten zylindrischen Befestigungsmutter ein Verschließen der Ausnehmung des Halteelements notwendig wird. Ein horizontales Einführen der zylindrischen Befestigungsmutter in eine zylindrische Ausnehmung ist jedoch wegen des gegenüber auf der anderen Gabelseite der Kopplungsvorrichtung angeordneten Halteelements nicht möglich. Vergrößert sich jedoch die Querschnittsfläche einer Ausnehmung im Abstand zu der dem gegenüberliegenden Halteelement zugewandten Seite, so kann, bei geeigneter Formgebung der Ausnehmung, die zylindrische Befestigungsmutter schräg eingeführt und dann horizontal ausgerichtet werden. Auf diese Weise ist es möglich, dass die Vorderradachse des leicht schräg gehaltenen Kinderrads in die entsprechend gestaltete Ausnehmung des Halteelements auf der einen Seite der Gabel der Kopplungsvorrichtung eingeführt werden kann, ohne dass zusätzlicher Montageaufwand notwendig wird. Nur das Halteelement auf der gegenüberliegenden Seite muss geöffnet und nach Aufnahme der zugeordneten zylindrischen Befestigungsmutter anschließend wieder verschlossen werden. Trotz des wesentlich erleichterten Befestigungsvorgangs wird die Sicherheit und Stabilität der Befestigung des Kinderfahrrads an der Kopplungsvorrichtung des schleppenden Fahrrads nicht beeinträchtigt.

Einer Ausgestaltung des Erfindungsgedankens zufolge ist vorgesehen, dass die Ausnehmung mit sich ändernder Querschnittsfläche im wesentlichen zwei im spitzen Winkel zueinander verlaufenden Bohrungen konstanter Querschnittsfläche entspricht. Eine derartige Ausnehmung ist mit einfachen Mitteln schnell und kostengünstig herstellbar.

Vorzugsweise ist vorgesehen, dass das Halteelement mit der Ausnehmung mit sich ändernder Querschnittsfläche an der dem schleppenden Fahrrad zugewandten Seite an der Gabel der Kopplungsvorrichtung angeordnet ist. Das Halteelement, das geöffnet und nach Aufnahme der zylindrischen Befestigungsmutter wieder verschlossen werden muss, ist dann auf der frei zugänglichen Außenseite angeordnet. Dadurch entfällt die Notwendigkeit, zur sicheren Befestigung des Kinderfahrrads an der Kopplungsvorrichtung zwischen die dann nebeneinander angeordneten Räder des schleppenden und des zu schleppenden Fahrrads zu greifen und dort Befestigungsvorrichtungen zu betätigen. Die Handhabung wird so wesentlich erleichtert und die Gefahr einer möglichen Verschmutzung der Bekleidung während des Befestigungsvorgangs weitgehend ausgeschlossen.

Besonders vorteilhafterweise ist vorgesehen, dass das Halteelement mit der Ausnehmung mit konstanter Querschnittsfläche als lösbare Schelle ausgeführt ist, die auf der dem schleppenden Fahrrad abgewandten Seite an der Gabel der Kopplungsvorrichtung dauerhaft befestigt ist. Durch eine Schelle wird einerseits eine stabile und zuverlässige Aufnahme der zylindrischen Befestigungsmutter gewährleistet, andererseits kann eine Schelle mit einer als Schnellspannvorrichtung oder Flügelschraube ausgeführten Befestigungsvorrichtung einfach und schnell geöffnet und sicher wieder verschlossen werden.

Es ist vorgesehen, dass die Kopplungsvorrichtung Befestigungsvorrichtungen zur dauerhaften Befestigung im Bereich der Hinterradachse und im Abstand davon seitlich am Rahmen des schleppenden Fahrrads aufweist. Mit geringem Aufwand kann dadurch eine stabile und verbindungssteife Befestigung der Kopplungsvorrichtung an dem schleppenden Fahrrad erfolgen, die auch der erhöhten Belastung standhält, die durch ein auf dem daran befestigten Kinderfahrrad sitzendes Kind verursacht wird. An dieser Stelle angeordnet kann die Kopplungsvorrichtung über einen längeren Zeitraum an dem schleppenden Fahrrad befestigt bleiben, ohne die Fahreigenschaften und den Komfort beim Fahren mit und ohne mitgeführtem Kinderrad wesentlich zu beeinträchtigen.

Nachfolgend wird ein Ausführungsbeispiel der Erfindung näher erläutert, welches in der Zeichnung dargestellt ist.

Es zeigt:
Fig. 1 eine Seitenansicht einer im Bereich des Hinterrads eines schleppenden Fahrrads befestigte Kopplungsvorrichtung, wobei zur Verdeutlichung ein an der Kopplungsvorrichtung befestigtes Kinderfahrrad teilweise dargestellt ist,
Fig. 2 eine Draufsicht auf die in Fig. 1 dargestellte Kopplungsvorrichtung,
Fig. 3 eine Stirnansicht der in den Fig. 1 und 2 dargestellten Kopplungsvorrichtung und
Fig. 4 in vergrößerter und geschnittener Darstellung zwei Halteelemente jeweils mit einer Ausnehmung und einer darin befindlichen zylindrischen Befestigungsmutter mit Lagerhülse.

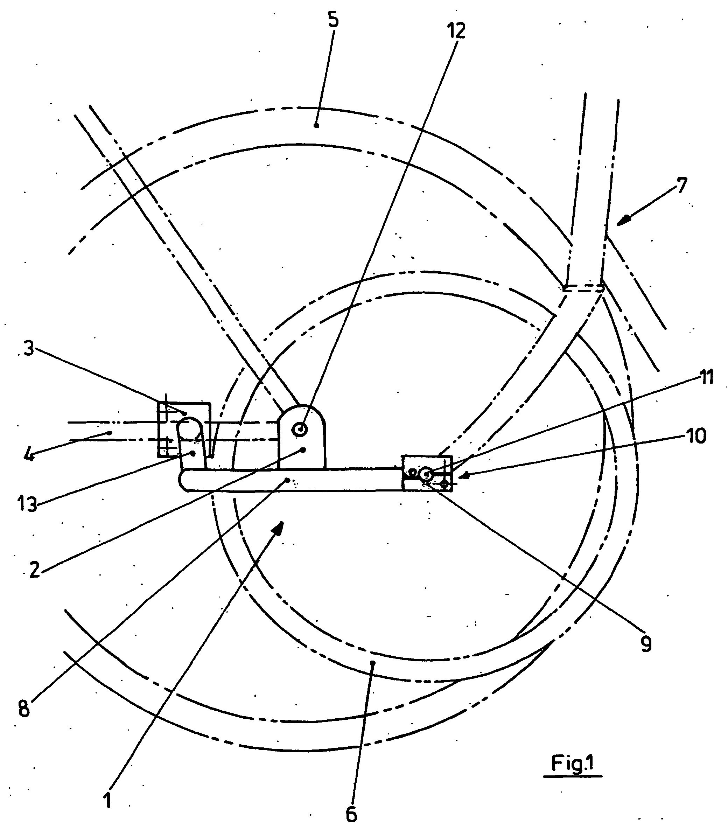

In Fig. 1 ist eine Kopplungsvorrichtung 1 dargestellt, die mittels zweier Befestigungsvorrichtungen 2, 3 seitlich an einem Rahmen 4 eines schleppenden Fahrrads befestigt ist. Die Kopplungsvorrichtung 1 ist im Bereich des Hinterrads 5 des schleppenden Fahrrads so angeordnet, dass das an der Kopplungsvorrichtung 1 befestigte Vorderrad 6 des abgeschleppten Kinderfahrrads 7 seitlich neben dem Hinterrad 5 des schleppenden Fahrrads vom Boden angehoben mitgeführt wird.

Die Kopplungsvorrichtung 1 weist ein gabelförmiges stabiles Rohrgestell 8 auf, an dessen beiden Enden sich Halteelemente 9, 10 zur Aufnahme der Vorderradachse 11 des mitgeführten Kinderfahrrads 7 befinden. Das gabelförmige stabile Rohrgestell 8 ist mittels der Befestigungsvorrichtung 2 im Bereich der Hinterradachse 12 des schleppenden Fahrrads mit dem Rahmen 4 verbunden. Das gabelförmige stabile Rohrgestell 8 ist im Abstand davon über einen bogenförmigen Haltebügel 13 und der daran angeordneten Befestigungsvorrichtung 3 zusätzlich und damit verbindungssteif mit dem Rahmen 4 des schleppenden Fahrrads verbunden.

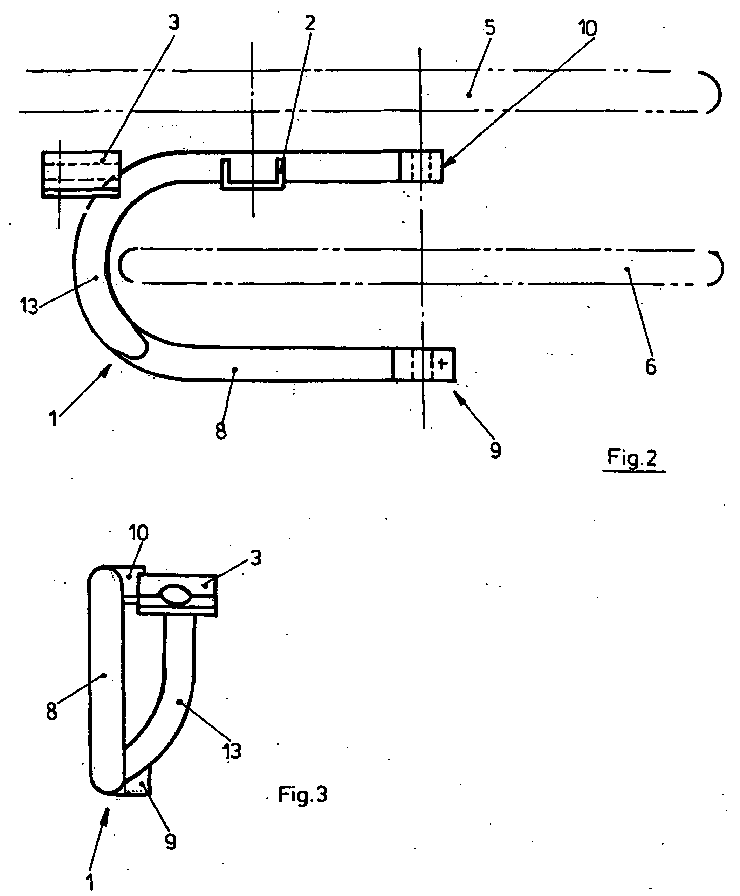

Fig. 2 zeigt eine Ansicht der Kopplungsvorrichtung 1 von oben. Zum besseren Verständnis sind das Hinterrad 5 des schleppenden Fahrrads sowie das Vorderrad 6 des Kinderfahrrads 7 angedeutet. An dem gabelförmigen stabilen Rohrgestell 8 ist die Befestigungsvorrichtung 2 sowie über den bogenförmigen Haltebügel 13 die Befestigungsvorrichtung 3 angeordnet. An den beiden Enden des gabelförmigen stabilen Rohrgestells 8 befinden sich die Haltelemente 9 und 10, die zur Aufnahme der nicht dargestellten Vorderradachse 11 des Kinderfahrrads 7 dienen.

Bei der in Fig. 3 dargestellten Stirnansicht der Kopplungsvorrichtung 1 ist der Verlauf des bogenförmigen Haltebügels 13, der die Befestigungsvorrichtung 3 mit dem gabelförmigen stabilen. Rohrgestell 8 verbindet, deutlich zu sehen.

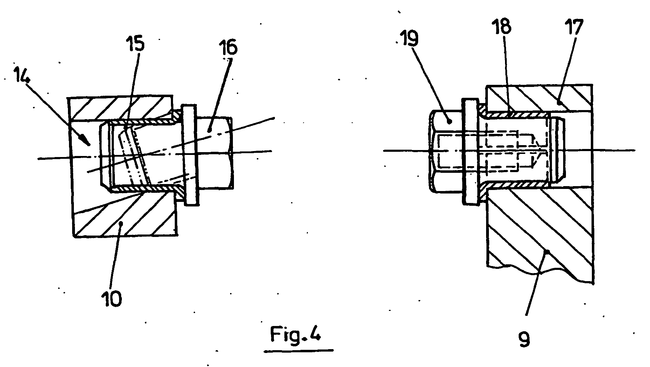

In Fig. 4 wird eine geschnittene Darstellung der beiden Halteelemente 9, 10 gezeigt. Das Halteelement 10, das auf der dem schleppenden Fahrrad zugewandten Seite des gabelförmigen stabilen Rohrgestells 8 angeordnet ist, weist eine Ausnehmung 14 auf, deren Querschnittsfläche im Abstand von der dem nicht dargestellten Vorderrad 6 des Kinderfahrrads 7 zugewandten Seite zunimmt. Im Inneren der Ausnehmung 14 des Halteelements 10 befindet sich eine Lagerhülse 15, in welcher eine zylindrische Befestigungsmutter 16 aufgenommen und gelagert ist. Die zylindrische Befestigungsmutter 16 kann zusammen mit der umgebenden Lagerhülse 15 schräg von oben in die Ausnehmung 14 eingeführt werden. Nach anschließender horizontaler Ausrichtung der zylindrischen Befestigungsmutter 16 wird die Position der Lagerhülse 15, die bereichsweise dicht an der Innenrandfläche der Ausnehmung 14 anliegt, in dem Halteelement 10 fixiert. Die zylindrische Befestigungsmutter 16 ist drehbar in der Lagerhülse 15 gelagert.

Das auf der anderen Seite des gabelförmigen stabilen Rohrgestells 8 angeordnete Halteelement 9 ist als Schelle ausgeführt, deren Oberteil 17 geöffnet und nach Aufnahme einer Lagerhülse 18 und einer darin angeordneten zylindrischen Befestigungsmutter 19 wieder geschlossen werden kann. Das Schellenoberteil 17 kann dabei beispielsweise durch nicht dargestellte lösbare Schrauben mit dem Schellenunterteil verbunden sein. Es ist aber auch denkbar und besonders vorteilhaft, dass das Schellenoberteil 17 schwenkbar an dem Schellenunterteil gelagert und beispielsweise mittels einer Schnellspanneinrichtung oder Flügelschraube zuverlässig verschlossen werden kann.

## Patentansprüche

1. Kopplungsvorrichtung (1) für Fahrräder zum Verbinden eines schleppenden Fahrrads mit einem zu schleppenden Kinderfahrrad (7), wobei das Vorderrad des zu schleppenden Kinderfahrrads vom Boden abgehoben mit der Kopplungsvorrichtung (1) verbindbar ist, wobei die Kopplungsvorrichtung (1) an mindestens zwei Stellen am Rahmen (4) des schleppenden Fahrrads fest anbringbar ist und eine Gabel mit Halteelementen (9, 10) mit jeweils einer Ausnehmung (14) zur Aufnahme der Vorderradachse (11) des zu schleppenden Kinderfahrrads (7) aufweist, und wobei auf beiden Seiten der Vorderradachse (11) des zu schleppenden Kinderfahrrads (7) je eine Befestigungsmutter (16, 19) angebracht ist, **dadurch gekennzeichnet, dass** die Befestigungsmuttern (16 und 19) eine zylindrische Ausbildung aufweisen, deren Außendurchmesser an die Größe der Ausnehmungen (14) der Halteelemente (9 und 10) angepasst sind.

2. Kopplungsvorrichtung (1) nach Anspruch 1, **dadurch gekennzeichnet, dass** zwischen den zylindrischen Befestigungsmuttern (16, 19) und den Ausnehmungen (14) der Halteelemente (9, 10) Lagerhülsen (15, 18) drehbeweglich angeordnet sind.

3. Kopplungsvorrichtung (1) nach Anspruch 1, **dadurch gekennzeichnet, dass** die zylindrischen Befestigungsmuttern (16, 19) als Gleitlager gestaltet und/oder mit geeignetem Lagermaterial beschichtet sind.

4. Kopplungsvorrichtung (1) nach Anspruch 1, **dadurch gekennzeichnet, dass** die Querschnittsfläche einer der beiden Ausnehmungen (14) im Abstand von dem aufzunehmenden Kinderfahrrad (7) vergrößert ist.

5. Kopplungsvorrichtung (1) nach Anspruch 4, **dadurch gekennzeichnet, dass** die Ausnehmung (14) mit sich ändernder Querschnittsfläche im wesentlichen zwei in spitzem Winkel zueinander verlaufenden Bohrungen konstanter Querschnittsfläche entspricht.

6. Kopplungsvorrichtung (1) nach Anspruch 4 oder 5, **dadurch gekennzeichnet, dass** das Halteelement (10) mit der Ausnehmung (14) mit sich ändernder Querschnittsfläche an der dem schleppenden Fahrrad zugewandten Seite der Gabel (8) der Kopplungsvorrichtung (1) angeordnet ist.

7. Kopplungsvorrichtung (1) nach Anspruch 1, **dadurch gekennzeichnet, dass** das Halteelement (9) mit der Ausnehmung mit konstanter Querschnittsfläche als lösbare Schelle ausgeführt ist, die auf der dem schleppenden Fahrrad abgewandten Seite an der Gabel (8) der Kopplungsvorrichtung (1) dauerhaft befestigt ist.

8. Kopplungsvorrichtung (1) nach Anspruch 1, **dadurch gekennzeichnet, dass** die Kopplungsvorrichtung (1) Befestigungsvorrichtungen (2, 3) zur dauerhaften Befestigung im Bereich der Hinterradachse (12) und im Abstand davon seitlich am Rahmen (4) des schleppenden Fahrrads aufweist..

## Claims

1. Coupling device (1) for bicycles for connecting a towing bicycle to a child's bicycle (7) which is to be towed, the front wheel of the child's bicycle which is to be towed being raised from the ground and being connectable to the coupling device (1), the coupling device (1) being fixedly attached at at least two points to the frame (4) of the towing bicycle and having a fork with retaining elements (9, 10) with one recess (14) in each case for receiving the front wheel axle (11) of the child's bicycle (7) to be towed, and a respective fastening nut (16, 19) being fixed on both sides of the front wheel axle (11) of the child's bicycle (7) to be towed, **characterized in that** the fastening nuts (16 and 19) have a cylindrical design and their outside diameters are matched to the size of the recesses (14) of the retaining elements (9 an 10).

2. Coupling device (1) according to Claim 1, **characterized in that** bearing sleeves (15, 18) are arranged rotatably between the cylindrical fastening nuts (16, 19) and the recesses (14) of the retaining elements (9, 10).

3. Coupling device (1) according to Claim 1, **characterized in that** the cylindrical fastening nuts (16, 19) are designed as sliding bearings and/or are coated with a suitable bearing material.

4. Coupling device (1) according to Claim 1, **characterized in that** the cross-sectional area of one of the two recesses (14) is enlarged at a distance from the child's bicycle (7) to be lifted up.

5. Coupling device (1) according to Claim 4, **characterized in that** the recess (14) with the changing cross-sectional area corresponds essentially to two holes of constant cross-sectional area that run at an acute angle with respect to each other.

6. Coupling device (1) according to Claim 4 or 5, **characterized in that** the retaining element (10) having the recess (14) with the changing cross-sectional area is arranged on that side of the fork (8) of the coupling device (1) which faces the towing bicycle

7. Coupling device (1) according to Claim 1, **characterized in that** the retaining element (9) having the recess with the constant cross-sectional area is designed as a releasable clip which is fastened permanently to the fork (8) of the coupling device (1) on the side facing away from the towing bicycle.

8. Coupling device (1) according to Claim 1, **characterized in that** the coupling device (1) has fastening devices (2, 3) for the permanent fastening laterally to the frame (4) of the towing bicycle in the region of the rear wheel axle (12) and at a distance therefrom.

## Revendications

1. Dispositif de couplage (1) pour bicyclettes, pour connecter une bicyclette motrice à une bicyclette d'enfant (7) à remorquer, la roue avant de la bicyclette d'enfant à remorquer pouvant être connectée au dispositif de couplage (1) tout en étant soulevée du sol, le dispositif de couplage (1) pouvant être attaché fixement en au moins deux endroits sur le cadre (4) de la bicyclette motrice et présentant une fourche pourvue d'éléments de fixation (9, 10) avec à chaque fois un logement (14) pour recevoir l'essieu avant (11) de la bicyclette d'enfant à remorquer (7), et un écrou de fixation respectif (16, 19) étant monté des deux côtés de l'epsieu avant (11) de la bicyclette d'enfant à remorquer (7), **caractérisé en ce que** les écrous de fixation (16 et 19) présentent une réalisation cylindrique, dont les diamètres extérieurs sont adaptés à la taille des logements (14) des éléments de fixation (9 et 10).

2. Dispositif de couplage (1) selon la revendication 1, **caractérisé en ce qu'**entre les écrous de fixation cylindriques (16, 19) et les logements (14) des éléments de fixation (9, 10) sont disposées des douilles-paliers (15, 18) de manière mobile en rotation.

3. , Dispositif de couplage (1) selon la revendication 1, **caractérisé en ce que** les écrous de fixation cylindriques (16, 19) sont configurés sous forme de paliers lisses et/ou sont revêtus de matériau de palier approprié.

4. Dispositif de couplage (1) selon la revendication 1, **caractérisé en ce que** la surface en section transversale de l'un des deux logements (14) est agrandie à distance de la bicyclette d'enfant à recevoir (7).

5. Dispositif de couplage (1) selon la revendication 4, **caractérisé en ce que** le logement (14) dont la surface en section transversale varie correspond essentiellement à deux alésages de surface en section transversale constante s'étendant l'un vers l'autre suivant un angle aigu.

6. Dispositif de couplage (1) selon la revendication 4 ou 5, **caractérisé en ce que** l'élément de fixation (10) avec le logement (14) dont la surface en section transversale varie est disposé du côté de la fourche (8) du dispositif de couplage (1) tourné vers la bicyclette motrice.

7. Dispositif de couplage (1) selon la revendication 1, **caractérisé en ce que** l'élément de fixation (9) avec le logement de surface en section transversale constante est réalisé sous forme de collier desserrable qui est fixé de manière durable du côté opposé à la bicyclette motrice sur la fourche (8) du dispositif de couplage (1).

8. Dispositif de couplage (1) selon la revendication 1, **caractérisé en ce que** le dispositif de couplage (1) présente des dispositifs de fixation (2, 3) pour la fixation durable dans la région de l'essieu arrière (12) et à distance de celui-ci latéralement sur le cadre (4) de la bicyclette motrice.
